# EUROPÄISCHE PATENTSCHRIFT

(11) **EP 4 282 698 B1**
(45) Veröffentlichungstag und Bekanntmachung des Hinweises auf die Patenterteilung: **29.07.2026**
(21) Anmeldenummer: 23175876.4
(22) Anmeldetag: 30.08.2021
(51) Int. Cl.: B60M 1/26, B60M 1/30

(54) **VORRICHTUNG ZUM AUSGLEICHEN EINER LÄNGENÄNDERUNG EINER STROMSCHIENE**
DEVICE FOR COMPENSATING FOR A CHANGE IN LENGTH OF A CONDUCTOR RAIL
DISPOSITIF POUR COMPENSER UNE MODIFICATION DE LONGUEUR D'UNE BARRE OMNIBUS

(30) Priorität: 28.08.2020 CN 202010884380
(43) Veröffentlichungstag der Anmeldung: 29.11.2023
(62) Teilanmeldung aus: 21765719.6
(73) Patentinhaber: Furrer + Frey AG, 3000 Bern 3 (CH)
(72) Erfinder: Furrer, Beat, 3012 Bern (CH); Lin, Xirong, Guangzhou, Guangdong, 510620 (CN); Wang, Beiwei, Guangzhou, Guangdong, 510620 (CN)
(74) Vertreter: von Bülow & Tamada

(56) Entgegenhaltungen:
- EP-A1- 3 159 205
- EP-A1- 3 260 326
- EP-B1- 1 436 163
- EP-B1- 2 691 256

## Beschreibung

Die vorliegende Erfindung betrifft eine Vorrichtung zum Ausgleichen einer Längenänderung einer Stromschiene.

Eine Vorrichtung gemäß dem Oberbegriff des Anspruchs 1 ist aus der EP 3 260 326 A1 bekannt.

Aufgabe der Erfindung ist es, die bekannte Vorrichtung zu verbessern.

Die Aufgabe wird durch die Merkmale des unabhängigen Anspruchs gelöst. Bevorzugte Weiterbildungen sind Gegenstand der abhängigen Ansprüche.

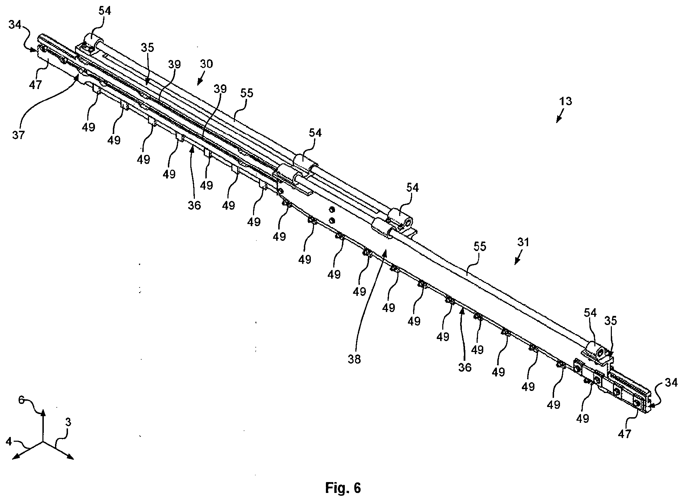

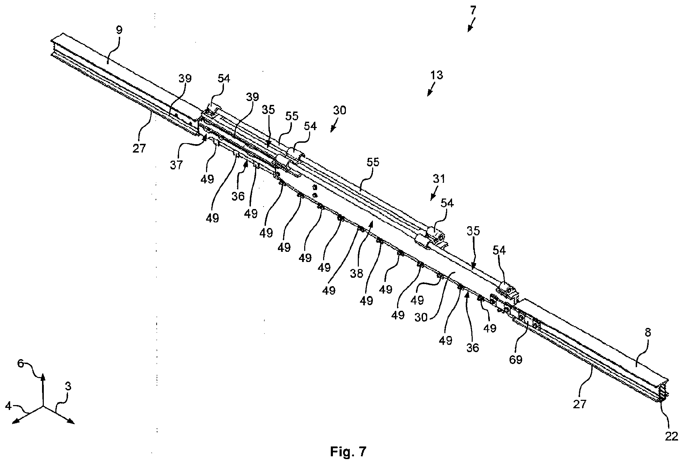

Die Eigenschaften, Merkmale und Vorteile dieser Erfindung sowie die Art und Weise wie diese erreicht werden, werden verständlicher im Zusammenhang mit der folgenden Beschreibung von Beispielen, die im Zusammenhang mit den Figuren näher 30 erläutert werden. Nur die Figuren 6 und 7 zeigen die erfindungsgemäße Vorrichtung; die übrigen Figuren sind hilfreich für das Verständnis der Erfindung.

Es zeigen:
Fig. 1 eine schematische Darstellung eines Gleisabschnittes für ein Schienenfahrzeug mit einer Stromschiene und einer Vorrichtung zum Ausgleichen einer Längenänderung der Stromschiene,
Fig. 2 eine perspektivische Ansicht der Stromschiene aus Fig. 1,
Fig. 3 eine perspektivische Ansicht eines Schlittens für die Vorrichtung zum Ausgleichen der Längenänderung der Stromschiene aus Fig. 1,
Fig. 4 eine perspektivische Ansicht eines Kulissensteins für die Vorrichtung zum Ausgleichen der Längenänderung der Stromschiene aus Fig. 1,
Fig. 5a eine perspektivische Ansicht eines ersten Teils für eine Gleitmuffe für die Vorrichtung zum Ausgleichen der Längenänderung der Stromschiene aus Fig. 1,
Fig. 5b eine perspektivische Ansicht eines zweiten Teils für die Gleitmuffe für die Vorrichtung zum Ausgleichen der Längenänderung der Stromschiene aus Fig. 1,
Fig. 5c eine perspektivische Ansicht der beiden zur Gleitmuffe zusammengesetzten Teile aus Fig. 5a und 5b,
Fig. 5d eine Schnittansicht der Gleitmuffe für die Vorrichtung zum Ausgleichen der Längenänderung der Stromschiene aus Fig. 1,
Fig. 6 eine perspektivische Ansicht der Vorrichtung zum Ausgleichen einer Längenänderung der Stromschiene aus Fig. 1,
Fig. 7 eine perspektivische Ansicht eines Teils des Gleisabschnittes aus Fig. 1 mit der Vorrichtung zum Ausgleichen einer Längenänderung der Stromschiene aus Fig. 6,
Fig. 8 den Teil des Gleisabschnittes aus Fig. 7 in einer Schnittdarstellung,
Fig. 9 eine perspektivische Ansicht des Gleisabschnittteils aus Fig. 7 mit einer alternativen Vorrichtung zum Ausgleichen einer Längenänderung der Stromschiene,

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

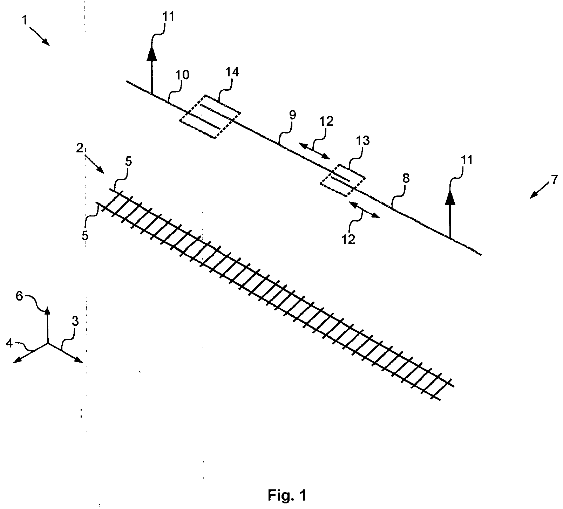

Es wird auf Fig. 1 Bezug genommen, die eine schematische Darstellung eines Gleisabschnittes 1 für ein nicht weiter zu sehendes Schienenfahrzeug zeigt. Der Gleisabschnitt 1 umfasst ein Gleis 2, das sich in und entgegen einer Fahrtrichtung 3 (auch Längsrichtung genannt) des Schienenfahrzeuges erstreckt und in einer Querrichtung 4 rechtwinklig zur Fahrtrichtung 3 gesehen zwei parallel nebeneinander laufende Fahrschienen 5 umfasst.

Rechtwinklig zur Fahrtrichtung 3 und rechtwinklig zur Querrichtung 4 gesehen erstreckt sich in einer Höhenrichtung 6 gesehen über dem Gleis 2 eine Stromschiene 7, die sich entgegen der Fahrtrichtung 3 gesehen aneinandergereiht aus einem ersten Stromschienenteil 8, einem zweiten Stromschienenteil 9 und einem dritten Stromschienenteil 10 zusammensetzt.

Das Schienenfahrzeug fährt somit geführt durch das Gleis 2 in oder entgegen der Fahrtrichtung 3 und entnimmt die zum Antrieb notwendige elektrische Energie über einen Pantographen aus der Stromschiene 7. Hierzu sind das erste Stromschienenteil 8 und das dritte Stromschienenteil 10 an eine elektrische Energieversorgung 11 angeschlossen.

Die einzelnen Stromschienenteile 8, 9 und 10 der Stromschiene 7 unterliegen Längenänderungen aufgrund von Temperaturschwankungen, die in Fig. 1 mit dem Bezugszeichen 12 referenziert sind. Zum Ausgleichen dieser Längenänderungen 12 umfasst die Stromschiene 7 eine Vorrichtung 13, auf die später im Detail eingegangen wird. An der Stelle der Vorrichtung 13 zum Ausgleichen der Längenänderungen 12 sind die Stromschienenteile 8, 9 funktionsbedingt elektrisch voneinander getrennt, um den Ausgleich der Längenänderungen 12 mit wenig mechanischen Belastungen zu ermöglichen. Grundsätzlich könnten die beiden Stromschienenteile 8, 9 an dieser Stelle allerdings elektrischen Strom zwischeneinander übergeben.

Dies ist im Falle eines Streckentrenners 14, der in Fig. 1 in Fahrtrichtung 3 gesehen vor der Vorrichtungen 13 zum Ausgleich der Längenänderungen 12 angeordnet ist, nicht der Fall. Dieser ist vorhanden, um beispielsweise für Wartungs- und Reparatureinsätze einen Bereich der Stromschiene 7 stromlos zu schalten und die Sicherheit des Personals in diesem Bereich zu gewährleisten. An der Stelle dürfen die beteiligen Stromschienenteile 9, 10 daher keinen elektrischen Strom zwischeneinander führen.

Wenn eine eigene elektrische Energieversorgung 11 für den zweiten Stromschienenteil 9 vermieden werden soll, muss die elektrische Energieübertragung daher an der Stelle der Vorrichtung 13 zum Ausgleich der Längenänderung stattfinden, worauf ebenfalls an späterer Stelle im Detail eingegangen wird.

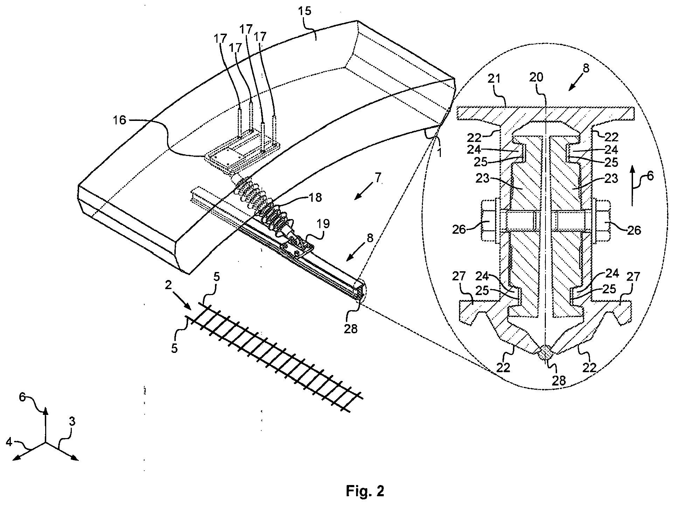

Zuvor soll allerdings anhand von Fig. 2 der Aufbau der Stromschiene 7 anhand des ersten Stromschienenteils 8 im Detail erläutert werden.

Die Stromschiene 7 ist an einem Träger 15, hier beispielhaft als Tunneldecke ausgeführt, aufgehängt. Die Aufhängung am Träger 15 erfolgt hier beispielhaft über eine Trägerplatte 16, die mittels Schwerlastankern 17 am Träger 15 gehalten ist. In der Höhenrichtung 6 gesehen schließt sich unterhalb der Trägerplatte 16 ein Langstabisolator 18 an, an dessen dem Träger 15 gegenüberliegenden Ende sich eine weitere Trägerplatte 19 anschließt, an der wiederum das zu beschreibende Stromschienenteil 8 gehalten ist. Die Befestigung einer Stromschiene an einem Träger ist bestens bekannt und kann beispielsweise in der WO 2019 / 097 325 A1 im Detail eingesehen werden. Auf eine nähere Beschreibung wird daher der Kürze halber verzichtet.

Das in Fig. 2 diskutierte Stromschienenteil 8 ist, wie die anderen Stromschienenteile 9, 10 aufgebaut und bezüglich einer sich in der Höhenrichtung 6 erstreckenden Symmetrieebene 20 symmetrisch ausgebildet. In der Höhenrichtung 6 gesehen an der Oberseite besitzt das Stromschienenteil 8 einen Querarm 21, an den sich entgegen der Höhenrichtung 6 verlaufend Spannarme 22 anschließen. Auf die Spannarme 22 lassen sich an ihren aufeinander zu gewendeten Seiten Stoßlaschen 23 aufsetzen, um einzelne Stromschienenteile in der Höhenrichtung 6 exakt aufeinander auszurichten.

Diese Ausrichtung kann durch einen in der Höhenrichtung 6 wirkenden Formschluss beispielsweise mittels Federn 24 und Nuten 25 unterstützt werden. Zur dauerhaften Befestigung sind die Stoßlaschen 23 mittels Schrauben 26 an die Spannarme 22 angeschraubt. Die Ausrichtungsunterstützung mittels Federn 24 und Nuten 25 ist in DE 20 2004 009 420 U1 beschrieben und kann dort im Detail eingesehen werden.

An einer dem Querarm 21 gegenüberliegenden Seite der Spannarme 22 weist jeder Spannarm 22 eine Fahrstraße 27 auf, auf der sich ein nicht weiter gezeigtes Montagefahrzeug bewegen kann, welches die Spannarme 22 zum Einsetzen eines die elektrische Energie für das Schienenfahrzeug führenden Fahrdrahtes 28 auseinanderzieht. Im montierten Zustand wird der Fahrdraht 28 dann von zwei Klemmarmen 29 kraft- und formschlüssig gehalten, die von den Spannarmen 22 aufeinander zu gerichtet zum Fahrdraht 28 hin verlaufen.

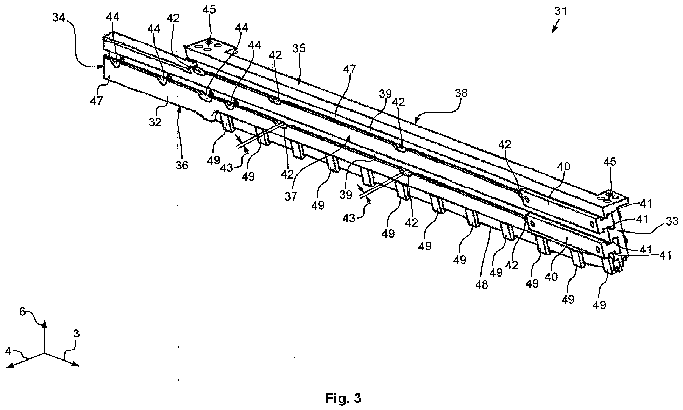

An das in Fig. 2 gezeigte Stromschienenteil 8 schließt sich die in Fig. 1 schematisch angedeutete Vorrichtung 13 zum Ausgleichen der Längenänderungen 12 der Stromschiene 7 an. Diese wird nachstehend anhand Fig. 3 bis 6 im Einzelnen erläutert.

Die Vorrichtung 13 besitzt einen ersten Schlitten 30 und zum ersten Schlitten 30 gleich aufgebauten zweiten Schlitten 31, die in den Figs. 6 bis 8 beide zu sehen sind. In Fig. 3 ist der zweite Schlitten 31 isoliert abgebildet und wird nachstehend beispielhaft für beide Schlitten 30, 31 näher erläutert.

Der zweite Schlitten 31 besitzt einen Schlittengrundkörper 32, der in der Fahrtrichtung 3 gesehen durch eine vordere Stirnseite 33 und eine der gegenüberliegende hintere Stirnseite 34 begrenzt ist. In der Höhenrichtung 6 ist der Schlittengrundkörper 32 durch eine Deckseite 35 und eine der Deckseite 35 gegenüberliegenden Grundseite 36 begrenzt. In der Querrichtung 4 ist der Schlittengrundkörper 32 durch eine Kontaktseite 37 und eine der Kontaktseite 37 gegenüberliegende Außenseite 38 begrenzt.

In die Kontaktseite 37 des Schlittengrundkörpers 32 sind zwei Führungsschlitze 39 eingeformt, die sich in der Fahrtrichtung 3 erstrecken. Jeder Führungsschlitz 39 ist zur hinteren Stirnseite 34 hin geöffnet und zur vorderen Stirnseite 33 hin verschlossen, wobei im Bereich dieses Verschlusses von der Kontaktseite 37 in der Querrichtung 4 ein Formschlusselement 40 abragt. Grundsätzlich kann dieses Formschlusselement 40 einstückig mit dem Schlittengrundkörper 32 ausgebildet sein. Allerdings ist das Formschlusselement 40 in der vorliegenden Ausführung als eigenständiger Kullissenstein ausgeführt, der sowohl den Führungsschlitz 39 des einen Schlittens 31 als auch in den Führungsschlitz 30 des anderen Schlittens 30 einführbar ist. Hierauf wird an späterer Stelle näher eingegangen. Das Formschlusselement 40 wird daher im Weiteren als Kulissenstein 40 bezeichnet.

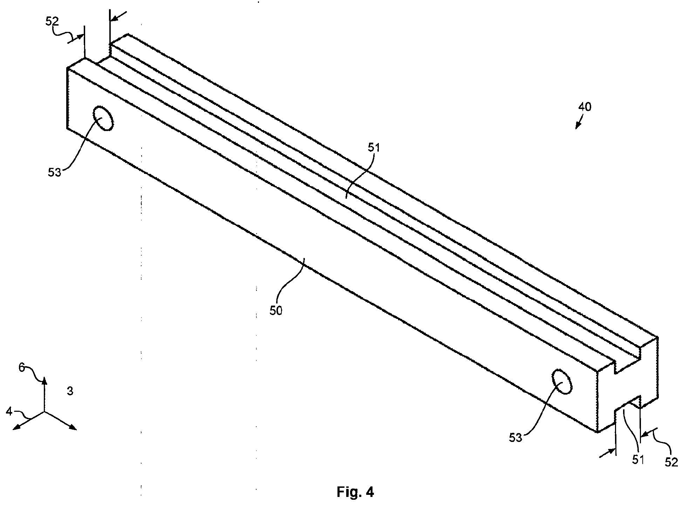

Jeder Führungsschlitz 39 ist T-Nut-förmig aufgebaut. Das heißt, dass an der Öffnung jedes Führungsschlitzes 39 zwei in der Höhenrichtung 6 aufeinander zu gerichtete Führungswände 41 ausgebildet sind, die den Kulissenstein 40 in und entgegen der Querrichtung 4 formschlüssig im Führungsschlitz 39 führen können. Die in der Höhenrichtung 6 gesehenen unteren Führungswände 41 jedes Führungsschlitzes 39 weisen dabei Reinigungsunterbrechungen 42 auf. Wird der Kulissenstein 40 durch den Führungsschlitz 39 geschoben und schiebt vor sich Fremdkörper her, dann können diese Fremdkörper den Führungsschlitz 39 über die Reinigungsunterbrechungen 42 verlassen. Um diese Reinigungswirkung weiter zu verbessern, können die Führungsschlitze 39 im Bereich der Reinigungsunterbrechungen 42 entgegen der Höhenrichtung 6 eine Reinigungsvertiefung 43 aufweisen, die in Fig. 4 der Übersichtlichkeit halber nicht an allen Reinigungsunterbrechungen 42 mit einem Bezugszeichen angedeutet ist. Durch die Reinigungsunterbrechungen 42 ist sichergestellt, dass Verunreinigungen den Gleitweg des Kulissensteins 40 im Führungsschlitz 39 in der zusammengesetzten Vorrichtung 13 nicht verkürzen. Neben den Reinigungsunterbrechungen 42 können die Führungswände 41 auch Befestigungsunterbrechungen 44 aufweisen, über die sich in die Führungsschlitze 39 einfach Befestigungsmittel wie Schrauben einführen lassen.

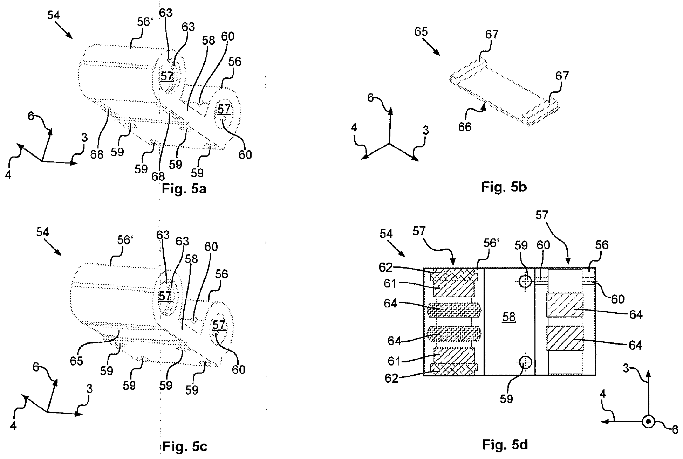

Auf der Deckseite 35 des Schlittengrundkörpers 32 besitzt jeder Schlitten 31 zwei Befestigungsflächen 45, auf denen später in Fig. 5a bis 5c erläuterte Gleitmuffen 46 getragen und befestigt werden können.

Im Bereich der hinteren Stirnseite 34 ist der Schlittengrundkörper 32 als Stutzen 47 aufgeführt, der sich wie die in Fig. 2 gezeigten Stoßlaschen 23 zwischen die Spannarme 22 einschieben lässt, um die Vorrichtung 13 an einen der Strömschienenteile 8, 9, 10 zu befestigen.

An der Grundseite 36 besitzt der Schlittengrundkörper 32 eine Montagewand 48. An die Montagewand 48 lassen sich Klammern 49 anschrauben, zwischen die sich der Fahrdraht 28 einklemmen lässt. Die Klammern 49 haben damit die gleiche Funktion, wie die Klemmarme 22 in Fig. 2. Von den Klammern 49 sind in Fig. 3 der Übersichtlichkeit halber nicht alle mit einem Bezugszeichen versehen.

Nachstehend wird anhand Fig. 4 der Kulissenstein 40 erläutert, der einen sich in der Fahrtrichtung 3 erstreckenden Kulissensteingrundkörper 50 besitzt.

In den Kulissensteingrundkörper 50 sind an der in der Höhenrichtung 6 gesehenen Oberseite und Unterseite je eine in der Fahrtrichtung 3 verlaufende Nut 51 eingeformt. Jede Nut 51 besitzt eine Nutbreite 52, die derart gewählt ist, dass in der Nut 51 von jedem Schlitten 30, 31 je eine Führungswand 41 jedes Schlittens 30, 31 nebeneinander aufgenommen werden kann, so dass beide Führungswände 41 in der Nut möglichst wenig Toleranzspiel in der Querrichtung haben.

Zwischen den Nuten 51 durchdringen den Kulissensteingrundkörper 50 mittig zwei Befestigungsbohrungen 53, die optional mit je einem nicht weiter gezeigten Innengewinde ausgeführt sein können. In diese Befestigungsbohrungen 53 lässt sich zur Befestigung des Kulissensteins 40 in den Führungsschlitzen 39 ein Befestigungsmittel wie beispielsweise eine Schraube einsetzen.

Nachstehend werden anhand der Fig. 5a bis 5d die bereits erwähnten Gleitmuffen 46 beschrieben. Ihre Aufgabe ist es, einen in Fig. 6 abgebildeten elektrisch leitfähigen Stab 55 mechanisch auf einem der Schlitten 30, 31 zu halten und elektrische Energie von einem elektrisch leitfähigen Stab 55 des benachbarten Schlittens 31, 30 abzugreifen, so dass eine Übertragung elektrischer Energie zwischen den beiden Schlitten 30, 31 stattfinden kann. Die Gleitmuffen 46 haben technisch gesehen grundsätzlich einen gleichen Aufbau und unterscheiden sich nur in einigen wenigen Punkten. Die in den Figs. 5a bis 5d abgebildete Gleitmuffe 46 wird hier als Referenzbeispiel diskutiert. Auf Unterschiede zu anderen Gleitmuffen 46 in der Vorrichtung 13 wird dabei im Text eingegangen.

Jede Gleitmuffe 46 besitzt einen hülsenförmigen Muffenkörper 56, den den eine Führungsöffnung 57 durchdringt, in die wiederum der leitfähige Stab 55 einführbar ist. Allen Gleitmuffen 46 ist gleich, dass der hülsenförmige Muffenkörper 56 auf einer Grundplatte 58 gehalten ist. In die Grundplatte 58 führen in der Höhenrichtung 6 gesehen von unten her Befestigungsbohrungen 59, in die sich Befestigungsmittel, wie beispielsweise Schrauben oder Nieten einführen lassen, um die Gleitmuffe 46 auf der in Fig. 4 gezeigten Befestigungsfläche 45 zu befestigen.

Der hülsenfömige Muffenkörper 56 nimmt den zuvor genannten elektrisch leitfähigen Stab 55 lagefest auf und dient als Festlager. Dies kann auf unterschiedliche Weise, beispielsweise durch eine Presspassung des elektrisch leitfähigen Stabes 55 im Muffenkörper 56, einen Stoffschluss des elektrisch leitfähigen Stabes 55 im Muffenkörper 56 oder durch einen Blockierstift erreicht werden, der durch den elektrisch leitfähigen Stabes 55 und eine Stiftaufnahme 60 im Muffenkörper 56 geführt ist.

Einige der Gleitmuffen 46, wie die in Fig. 5a bis 5d gezeigte Gleitmuffe 46, besitzen in der Querrichtung 4 gesehen einen weiteren hülsenfömigen Muffenkörper 56', wobei beide hülsenfömige Muffenkörper 56, 56' gemeinsam nebeneinander aber beabstandet zueinander auf der Grundplatte 58 gehalten sind.

Der weitere hülsenförmige Muffenkörper 56' dient als Loslager, das den den leitfähigen Stab 55 die Fahrtrichtung 3 als Bewegungsfreiheitsgrad lässt, ihn aber in der Höhenrichtung 6 und in der Querrichtung 4 lagert. Auf diese Weise ist der weitere hülsenförmige Muffenkörper 56' in der Fahrtrichtung 3 am elektrisch leitfähigen Stab 55 geführt gelagert. Um die Bewegungsfreiheit des weiteren hülsenförmigen Muffenkörpers 56' auf dem elektrisch leitfähigen Stab 55 zu unterstützen können in der Führungsöffnung 57 des weiteren hülsenförmigen Muffenkörpers 56' Lagerelemente 61 in Form von Gleit- oder Wälzlageelementen angeordnet sein, die gegebenenfalls noch durch Gleitvermittlungsmittel wie ein Schmierfett ergänzt werden können. Zum Schutz der Lagerelemente 61 vor äußeren Verunreinigungen kann die Führungsöffnung 57 des weiteren hülsenförmigen Muffenkörpers 56' in der Fahrtrichtung 3 gesehen am Anfang und am Ende mit Dichtungen 62 abgeschlossen sein. Zum Halt der Lagerelemente 61 und der Dichtungen 62 können in den Führungsöffnungen 57 des weiteren hülsenförmigen Muffenkörpers 56' entsprechende formschließende Haltefugen 63 ausgebildet sein.

Schließlich sind in den Führungsöffnungen 57 beider hülsenförmigen Muffenkörper 56, 56' elektrische Kontaktvermittler 64 angeordnet, die den elektrischen Kontakt zwischen den Gleitmuffen 54 und dem leitfähigen Stab 55 erhöhen. Hierbei kann es sich beispielsweise um Federn handeln, die durch mechanischen Druck eine hohe Kontaktfläche zwischen Gleitmuffe 54 und leitfähigem Stab 55 herstellen.

Besitzt die Gleitmuffe 54 zwei hülsenförmigen Muffenkörpern 56, 56' so kann in der Höhenrichtung 6 gesehen unterhalb des weiteren hülsenförmigen Muffenkörpers 56', in dem der leitfähige Stab 55 losgelagert ist, ein Gleitschuh 65 gehalten sein. Der Gleitschuh 65 ist in Fig. 5b gezeigt und besitzt in der Höhenrichtung 6 gesehen eine konvexe Unterseite 66. In der Höhenrichtung 6 gesehen oberhalb der konvexen Unterseite 66 sind auf dem Gleitschuh 65 Einsatzelemente 67 gehalten, die sich in der Fahrtrichtung-3 formschlüssig in Einsatzschlitze 68 an der Grundplatte 58 einsetzen lassen, so dass der Gleitschuh 65 in der Fahrtrichtung 3 formschlüssig an der Grundplatte 58 gehalten wird. Der Gleitschuh 65 kann grundsätzlich aus einem beliebigen Material ausgebildet sein. In der vorliegenden Ausführung ist der Gleitschuh 65 allerdings aus einem elektrisch isolierenden Material ausgebildet, welches für einen ausreichenden Isolationsabstand zwischen dem weiteren hülsenförmigen Muffenkörpers 56' und dem jeweils benachbarten Schlitten 30, 31 sorgt, so dass elektrischer Strom ausschließlich über den elektrisch leitfähigen Stab geleitet wird. Auf diese Weise werden unbeabsichtigte Spannungsüberschläge zwischen dem weiteren hülsenförmigen Muffenkörpers 56' und dem jeweils benachbarten Schlitten 30, 31 vermieden, die zu einer Schädigung der Gleitfläche führen und die Funktion der Vorrichtung 13 beeinträchtigen können.

Zum Zusammenbau der Vorrichtung 13 werden die Kulissensteine 40 zunächst in die Führungschlitze 39 beider Schlittengrundkörper 32 - wie es in Fig. 6 gezeigt ist - eingesetzt und über die Befestigungsbohrung 53 mit Schrauben an den vorderen Stirnseiten 33 der entsprechenden Schlittengrundkörper 32 fixiert. Anschließend werden die Kulissensteine 40 an den hinteren Stirnseiten 34 des jeweils anderen Schlittengrundkörpers 32 in die jeweiligen Führungsschlitze 39 eingeschoben, so dass sich beiden Schlitten 30, 31 zueinander in der Fahrtrichtung 3 geführt bewegen können. Im nächsten Schritt werden zwei leitfähige Stäb 55 verwendet. Ein Ende jedes elektrisch leitfähigen Stabes 55 wird in einer Gleitmuffen 54 mit nur einem hülsenförmigen Muffenkörper 56 festgelagert. Auf das andere Ende jedes elektrisch leitfähigen Stabes 55 wird dann der weitere hülsenförmige Muffenkörper 56' je einer Gleitmuffe 54 mit zwei hülsenförmigen Muffenkörpern 56, 56' geschoben. Im ersten hülsenförmigen Muffenkörper 56 wird dann das frei verbliebene Ende des jeweils anderen elektrisch leitfähigen Stabes 55 festgelagert. Die Grundplatten 58 der Gleitmuffen 54 in diesem Gebilde werden abschließend auf der Deckseite 35 der Schlittengrundkörper 32 in den Schlitten 30, 31 befestigt, so dass der Aufbau der Vorrichtung 13 nach Fig. 6 entsteht.

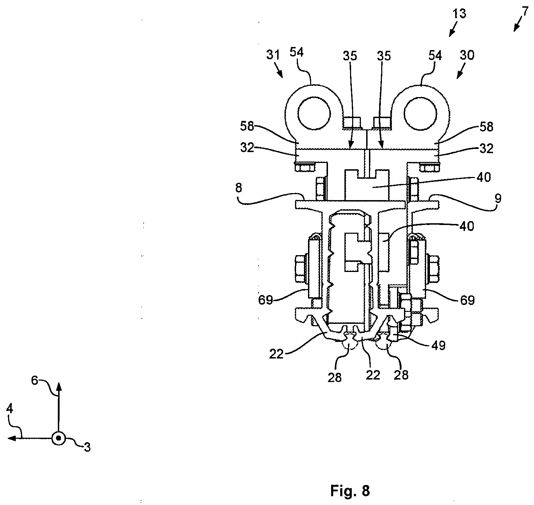

Zum Einbau der Vorrichtung 13 beispielsweise in den Gleisabschnitt 1 nach Fig. 1 wird der Stutzen 47 in den entsprechenden Stromschienenteil 8, 9 in Fahrtrichtung 3 gesehen vor oder nach der Vorrichtung 13 eingeführt und über eine weitere von außen aufgesetzte Stoßlasche 69 verschraubt, die in Fig. 7 und Fig. 8 zu sehen ist. Vor dem Verschrauben allerdings wird der Fahrdraht 22 eingesetzt. Im Bereich der Stromschienenteile 8, 9 kann der Fahrdraht mit dem bereits erwähnten, sich auf der Fahrstraße 27 bewegenden Montagefahrzeug erfolgen. Im Bereich der Vorrichtung 13 kann das Montagefahrzeug in der Fahrtrichtung 3 von der Fahrstraße 27 abgezogen beziehungsweise wieder aufgesetzt werden, weil sich die Vorrichtung 13 in der Querrichtung 4 nicht über die Spannarme 22 ausdehnt. An der Vorrichtung 13 dann kann der Fahrdraht 22 mittels der bereits erwähnten Klammern 49 befestigt werden. Die von außen aufgesetzte Stoßlasche 69 garantiert dabei, dass der Fahrdraht 22 in der Höhenrichtung 6 exakt ausnivelliert ist, so dass sich die angegebene Vorrichtung auch für den Einsatz im Hochgeschwindigkeitsverkehr eignet und der Pantograph des Schienenfahrzeuges auch bei Geschwindigkeiten von mehr als 150 km/h keine Erschütterungen am Übergang zwischen den Stromschienenteilen 8, 9 und der Vorrichtung 13 erfährt.

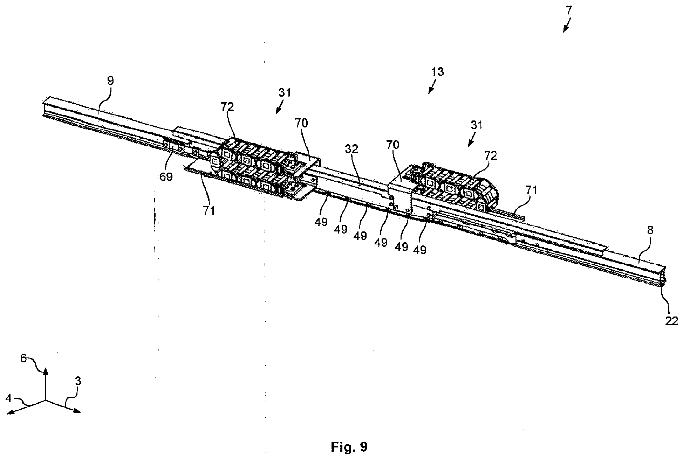

In Fig. 9 ist eine alternative Stromführung für die Vorrichtung 13 gezeigt.

In der alternativen Vorrichtung sind an den Schlittengrundkörpern 32 der Schlitten 30, 31 Winkelprofile 70, 71 gehalten, die mit einem Bandkabel 73 elektrisch verbunden sind. Die zuvor beschriebene Kompensation der Längenänderung 12 funktioniert mit den gleichen Mitteln und in der gleichen Weise. Nur die Übertragung der elektrischen Energie zwischen den Schlitten ist alternativ ausgeführt.

Die Übertragung der elektrischen Energie ist grundsätzlich nur dann notwendig, wenn der Streckentrenner 14 vorhanden und die elektrische Energieversorgung auf einem der Stromschienenteile 8, 9 nicht gewährleistet ist. Anderenfalls kann auf die Übertragung der elektrischen Energie sei es mit dem elektrisch leitfähigen Stab 55 oder mit der Bandkabel 73 verzichtet werden.

## Patentansprüche

1. Vorrichtung (13) zum Ausgleichen einer Längenänderung (12) einer sich in einer Fahrtrichtung (3) eines Schienenfahrzeuges erstreckenden Stromschiene (7), die sich aus einem in der Fahrtrichtung gesehenen vorderen Stromschienenteil (8) und einem in der Fahrtrichtung gesehenen hinteren Stromschienenteil (9) hinter dem vorderen Stromschienenteil (8) zusammensetzt, umfassend:
- einen mit dem vorderen Stromschienenteil (8) verbindbaren ersten Schlitten (30) mit einer Führungsschlitzseite (37), in der ein sich in der Längsrichtung (3) erstreckender Führungsschlitz (39) ausgebildet ist,
- einen mit dem hinteren Stromschienenteil (9) verbindbaren und in einer Querrichtung (4) rechtwinklig zur Fahrtrichtung (3) gesehen neben dem ersten Schlitten (30) angeordneten zweiten Schlitten (31) mit einem Formschlusselement (40), welches in der Querrichtung (4) in den Führungsschlitz des ersten Schlittens (30) eingreift,
- einen entgegen einer Höhenrichtung (6) rechtwinklig zur Fahrtrichtung (3) und rechtwinklig zur Querrichtung (4) auf den ersten Schlitten (30) aufgesetzten ersten elektrisch leitfähigen Stab (55), der elektrisch leitfähig mit dem ersten Schlitten (30) verbunden ist,
- einen entgegen der Höhenrichtung (6) auf den zweiten Schlitten (30) aufgesetzten zweiten elektrisch leitfähigen Stab (55), der elektrisch leitfähig mit dem zweiten Schlitten (31) verbunden ist, wobei wenigstens eine Gleitmuffe (54) in der Fahrtrichtung (3) gleitfähig und elektrisch leitend auf den ersten elektrischen Stab (55) aufgesetzt und mit dem zweiten elektrischen Stab (55) elektrisch leitfähig verbunden ist,
**dadurch gekennzeichnet, dass**
die Gleitmuffe (54) entgegen der Höhenrichtung (6) über ein mechanisches Kontaktelement (65) auf dem ersten Schlitten (30) losgelagert ist.

2. Vorrichtung (13) nach Anspruch 1, wobei das mechanische Kontaktelement (65) aus einem elektrischen Isolationsmaterial besteht.

3. Vorrichtung nach Anspruch 1 oder 2, wobei die das mechanische Kontaktelement (65) in der Fahrtrichtung (3) formschlüssig (67) wirkend in der Höhenrichtung (6) in die Gleitmuffe (54) eingesetzt ist.

4. Vorrichtung nach einem der Ansprüche 1 bis 3, wobei die das mechanische Kontaktelement (65) zur Gleitmuffe (54) hin konvex ausgebildet ist.

## Claims

1. Device (13) for compensating a change in length (12) of a conductor rail (7) extending in a direction of travel (3) of a rail vehicle, which conductor rail is composed of a front conductor rail part (8) seen in the direction of travel and a rear conductor rail part (9) seen in the direction of travel behind the front conductor rail part (8), comprising:
- a first slide (30) connectable to the front conductor rail part (8) and having a guide-slot side (37) in which a guide slot (39) extending in the longitudinal direction (3) is formed,
- a second slide (31) connectable to the rear conductor rail part (9) and arranged, as seen in a transverse direction (4) at right angles to the direction of travel (3), next to the first slide (30), and having a positive-locking element (40) which engages in the transverse direction (4) into the guide slot of the first slide (30),
- a first electrically conductive rod (55) placed onto the first slide (30) counter to a height direction (6) at right angles to the direction of travel (3) and at right angles to the transverse direction (4), which first rod is electrically conductively connected to the first slide (30),
- a second electrically conductive rod (55) placed onto the second slide (30) counter to the height direction (6), which second rod is electrically conductively connected to the second slide (31), wherein at least one sliding sleeve (54) is placed onto the first electrical rod (55) so as to be slidable in the direction of travel (3) and electrically conducting, and is electrically conductively connected to the second electrical rod (55),
**characterized in that**
the sliding sleeve (54) is loosely mounted on the first slide (30) counter to the height direction (6) via a mechanical contact element (65).

2. Device (13) according to claim 1, wherein the mechanical contact element (65) consists of an electrically insulating material.

3. Device according to claim 1 or 2, wherein the mechanical contact element (65) is inserted into the sliding sleeve (54) in the height direction (6) so as to act in a positive-locking manner (67) in the direction of travel (3).

4. Device according to any one of claims 1 to 3, wherein the mechanical contact element (65) is of convex configuration towards the sliding sleeve (54).

## Revendications

1. Dispositif (13) pour compenser une variation de longueur (12) d'un rail conducteur (7) s'étendant dans une direction de déplacement (3) d'un véhicule ferroviaire, lequel rail conducteur se compose d'une partie de rail conducteur avant (8) vue dans la direction de déplacement et d'une partie de rail conducteur arrière (9) vue dans la direction de déplacement derrière la partie de rail conducteur avant (8), comprenant :
- un premier chariot (30) pouvant être relié à la partie de rail conducteur avant (8) et présentant un côté à fente de guidage (37) dans lequel est ménagée une fente de guidage (39) s'étendant dans la direction longitudinale (3),
- un deuxième chariot (31) pouvant être relié à la partie de rail conducteur arrière (9) et disposé, vu dans une direction transversale (4) perpendiculaire à la direction de déplacement (3), à côté du premier chariot (30), et présentant un élément de complémentarité de forme (40) qui s'engage dans la direction transversale (4) dans la fente de guidage du premier chariot (30),
- une première tige électriquement conductrice (55) posée sur le premier chariot (30) à l'opposé d'une direction en hauteur (6), perpendiculairement à la direction de déplacement (3) et perpendiculairement à la direction transversale (4), laquelle première tige est reliée de manière électriquement conductrice au premier chariot (30),
- une deuxième tige électriquement conductrice (55) posée sur le deuxième chariot (30) à l'opposé de la direction en hauteur (6), laquelle deuxième tige est reliée de manière électriquement conductrice au deuxième chariot (31), au moins un manchon coulissant (54) étant posé sur la première tige électrique (55) de manière à pouvoir coulisser dans la direction de déplacement (3) et de manière électriquement conductrice, et étant relié de manière électriquement conductrice à la deuxième tige électrique (55),
**caractérisé en ce que**
le manchon coulissant (54) est monté de manière lâche sur le premier chariot (30) à l'opposé de la direction en hauteur (6) par l'intermédiaire d'un élément de contact mécanique (65).

2. Dispositif (13) selon la revendication 1, dans lequel l'élément de contact mécanique (65) est constitué d'un matériau électriquement isolant.

3. Dispositif selon la revendication 1 ou 2, dans lequel l'élément de contact mécanique (65) est inséré dans le manchon coulissant (54) dans la direction en hauteur (6) de manière à agir par complémentarité de forme (67) dans la direction de déplacement (3).

4. Dispositif selon l'une quelconque des revendications 1 à 3, dans lequel l'élément de contact mécanique (65) présente une forme convexe en direction du manchon coulissant (54).
